**Europäisches Patentamt**

**European Patent Office**

**Office européen des brevets**

(19)

(11) **EP 1 489 401 A1**

(12) **EUROPEAN PATENT APPLICATION**

| | |
|---|---|
| (43) Date of publication:<br>**22.12.2004 Bulletin 2004/52** | (51) Int Cl.$^7$: **G01M 13/02** |

(21) Application number: **04253489.1**

(22) Date of filing: **11.06.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Häse, Peter**<br>  **8610 Uster (CH)**<br>• **Kögel, Rüdiger**<br>  **76689 Karlsdorf-Neuthard (DE)** |
| (30) Priority: **17.06.2003 GB 0314013** | (74) Representative: **Broydé, Marc et al** |
| (71) Applicant: **Bombardier Transportation GmbH**<br>**13627 Berlin (DE)** | **Howrey Simon Arnold & White**<br>**CityPoint**<br>**One Ropemaker Street**<br>**London EC2Y 9HS (GB)** |

(54) **Method for determining wear or damage in a drive assembly**

(57)     The invention relates to a method for determining wear or damage in a drive assembly comprising a shaft and a gear comprising running the drive assembly in an idle run condition at a set point operating torque of the shaft near zero, superimposing a harmonic excitation torque on the set point operating torque, measuring a response of the drive assembly to the harmonic excitation torque, analysing the response to evaluate information regarding the wear or damage in the drive assembly. Further, the invention relates to a damage control unit for determining wear or damage in a drive assembly and to a drive assembly comprising such a damage control unit.

Fig. 1

EP 1 489 401 A1

**Description**

The invention relates to a method for determining wear or damage in a drive assembly comprising a shaft and a gear. Further, the invention relates to a damage control unit for determining wear or damage in a drive assembly and to a drive assembly comprising such a damage control unit.

DE 3314005 A1 describes a method to prevent damage by detecting changes in the condition of machinery, for example rotor bearings and toothed gears, by observing vibrations of parts of the machinery and comparing the determined values with the initial values. The disadvantage of this method is that it can only detect an overall change and does not provide direct and unambiguous information as to the cause, location, nature or magnitude of the change. Therefore the known method cannot provide sufficiently accurate information for determining actual wear and damage in a drive assembly and cannot provide reliable and safe criteria for timely maintenance to prevent further damage or accidents.

There is therefore a need for an improved method to determine wear or damage in a drive assembly, comprising a shaft and a gear that does not have the mentioned disadvantages.

According to the present invention there is provided a method comprising:

- running the drive assembly in an idle run condition at a set point operating torque of the shaft near zero,
- superimposing a harmonic excitation torque on the set point operating torque,
- measuring a response of the drive assembly to the harmonic excitation torque,
- analysing the response to evaluate information regarding the wear or damage in the drive assembly.

The method according to the invention provides reliable and unambiguous information that is directly correlated to the wear or damage in the drive assembly and hence can provide reliable criteria for timely maintenance and prevention of ancillary damage and accidents. The method according to the invention can provide direct information about the clearance of the gear of the drive assembly, in particular the flank clearance of a toothed gear.

It was found very important for the proper function of a toothed gear that a designed clearance of the tooth will be kept during the lifetime. In operation however this clearance may increase for example due to wear on the gearwheels, especially of the pinion but also of the bull gear, or due to damages of its bearings or of the gearbox. It is also possible that this clearance decreases due to high temperature, for example caused by loss of lubricant. In both cases a small failure grows up very fast and finally the whole gear and possibly the drive assembly will be damaged. So it is useful to detect small failures as soon as possible in order to provide maintenance to the gear whenever necessary.

In the prior art it is known to superimpose on a shaft an oscillating torque to obtain information from a system under examination. In patent application DE 43 10 528 a test rig is described in which a test shaft is exposed to an oscillating high torsional moments (torque) for the examination of the durability of the shaft. The test shaft is mounted between two electrical motors to exert strong torques in an oscillatory fashion, which for maximum effect is preferably done in resonance. As opposed to this, in the present invention the drive shaft is run in idle run conditions at a set point operating torque near zero, so the torsional moments on the shaft are close to zero. The superimposed harmonic excitation torque is small to prevent damage to the gear.

Patent application DE 33 41 594 describes an assembly for testing automatic gears comprising a driving shaft coupled over a torque converter to a gearbox that transforms rotational speed to a following shaft which is coupled over a coupling with a transmission shaft. The assembly further comprises means to superimpose on the torque of the driving shaft a small rotational variation and comprises a device to detect phase differences between the imposed rotational variations in the driving shaft and the following shaft. From this phase shift it can be detected that the coupling between the driving and the following shaft is open. The assembly enables to find the exact moment to close the coupling. In the present invention no coupling and uncoupling actions take place. Further in the present invention the harmonic excitation torque is superimposed when the drive assembly is in idle running conditions at a set point operating torque of the shaft near zero. In the prior art documents there is no reference to the testing of clearance (spacing) of the teeth of a gear, and no reference is made to the wear of gear wheels.

In a preferred embodiment of the invention the shaft is driven by an electric motor fed by a converter controlled by a converter control unit and wherein the harmonic excitation torque is superimposed by superimposing a harmonic excitation signal with a defined magnitude and frequency to a set point signal of the converter control unit that corresponds to the set point operating torque. The electric motor can be a diesel electric motor.

In idle run conditions the shaft does not or not substantially drive the gear. The shaft co-rotates with the gear without exerting a substantial force, such that the harmonic excitation torque superimposed on the set point operating torque actually results in a harmonic rotational displacement of the shaft engaging the gear. A gear clearance, for example between the pinion and the flanks of the toothed gear wheel, will cause a difference between the harmonic excitation torque of the shaft and the response to that signal. In this idle run condition the set point operating torque is near zero. Near zero here means that the set point operating torque is preferably as close to zero as possible in view of obtaining a response signal with sufficient information relating to gear clearance. Preferably, the set point operating torque is less than the magnitude of the harmonic excitation torque, more preferably less than 50 per cent of the excitation torque and even more preferably less than 10 per cent of the excitation torque. The skilled man can determine an operable range for the set point operating torque in which good resolution can be obtained.

In order to prevent wear and damage to the gears the method for determining wear is applied intermittently, for example once per day. The measurement is done for a short measurement time interval, sufficient to obtain a good response from the harmonic excitation torque, preferably less than 30 seconds more preferably between 1 and 20 seconds. The response is measured as a function of time during this measurement time interval.

The response of the drive assembly to the harmonic excitation torque can be measured in different ways. The measured response can be the angular velocity or the rotational displacement of the shaft recorded as a function of time during the measurement time interval. Alternatively, the response measured is an electrical characteristic, for example the motor current or the DC current of the converter. The response can also be an acoustic signal measured by acoustic sensors.

The response can be analysed in different ways. In one embodiment, the response is analysed by comparing the measured response with the harmonic excitation signal. The advantage is that direct information can be obtained about the clearance of the gear. Alternatively, or additionally, the response is analysed by comparing with a reference response measured in reference running conditions in response to a same-harmonic excitation torque. The latter method gives additional information about changes in time of the response signal.

The analysis and evaluation of the response may be done in any of the well-known ways. For example by a band pass filter, Discrete Fast Fourier Transformation (DFFT) or orthogonal correlation method.

Preferably an orthogonal correlation method is used as, for example, described in EP0826549. According to that method, the response is analysed by orthogonal correlation of the harmonic excitation torque or harmonic excitation signal with, and the measured response resulting in, an orthogonal correlation function, and evaluating this function by calculating a quote-part thereof as a measure for the clearance in the toothed gear. Preferably, the quote part of the orthogonal correlation analysis is compared with the reference quote part previously obtained under ideal running conditions. An alert signal can be given in case the evaluated quote part deviates more than a pre-defined amount from the reference quote part.

In order to obtain a good resolution of the response signal from the drive assembly, the magnitude of the harmonic excitation torque and hence of the harmonic excitation torque signal, is preferably chosen such that the rotational displacement of the shaft is higher than the maximum clearance to be detected. The magnitude is preferably not chosen too high in order to prevent damage to the gear due to the measurements itself. The skilled man will easily be able to determine an optimal magnitude. In another embodiment, the magnitude of the harmonic excitation torque signal is gradually increased to a point where a good resolution of the response signal can be obtained from which the gear clearance information can be derived.

The frequency of the harmonic excitation torque is chosen in view of obtaining an optimal evaluation result of the analysis of the response. Preferably, the frequency of the harmonic excitation torque is chosen sufficiently far from a torsional eigen frequency of the drive assembly, calculated from the formula (I):

$$\omega) = \sqrt{c_t/J_R},$$

in which $J_R$ is the inertia of the rotor of the motor and $c_t$ is the torsional stiffness of the shaft connecting the rotor and the gear. Preferably, the frequency of the harmonic excitation torque is below the lowest torsional eigen-frequency, preferably lower than 90% of the lowest torsional eigen-frequency. In this way, interferences by eigen-vibrations of the drive assembly are prevented.

The invention further relates to a damage control unit for determining wear or damage in a drive assembly, the drive assembly comprising an electric motor, a converter, a converter control unit and a gear, the damage control unit comprising:

- An activating/deactivating unit which enables the damage control unit to act periodically,
- A signal generator which generates a harmonic excitation signal with predefined magnitude and frequency to connect to the converter control unit for superimposing the excitation signal to a set point torque signal of the converter control unit,
- A response measurement means for measuring a response of the drive assembly to the harmonic excitation signal,
- A response analysis means to analyse the response of the drive assembly and evaluate information regarding the wear or damage in the drive assembly,

Preferably, the response measured is the angular velocity of the shaft or, preferably of the rotor of the motor. The response measurement means preferably is an angular velocity sensor placed between the stator and rotor of the motor. The advantage is that this sensor is already present for feeding back angular velocity information to the converter control and hence no extra sensor is needed. Different commonly known types of angular velocity sensors can be used, for example based on magnetic or optical effects. The response analysis means is for example a computer comprising software for the analysis of the response for example orthogonal correlation software, and software which compares analysis information with predefined performance criteria.

The damage control unit may further comprise an operator unit functioning as an interface to the user for in and output of information for the damage control unit. The response analysis means and the operator unit may, be combined in a single unit and maybe physically separate from the other parts of the damage control unit. The measurement parts of the damage control unit, i.e. the activating/deactivating unit the signal generator and the response measurement means, are controlled by the operating unit. The operating unit controls the activating/deactivating unit to switch the damage control unit based on user defined preferences using set point information stored in the operator unit, for example the set point torque signal value. The operator unit also controls the input for the duration, magnitude and frequency of the harmonic excitation signal produced by the signal generator. Further the operator unit comprises threshold values for alert signals to warn the operator of any occurring wear or damage. The response analysis means produces information, which is presented to the user through the operator unit.

Further the invention relates to a drive assembly comprising an electric motor, a converter, a converter control unit a gear and a damage control unit as described above.

An embodiment of the method of the present invention will now be described, by way of example only, with reference to the accompanying drawings, in which:

Figure 1 is a schematic representation of a drive assembly;

Figure 2 is a schematic representation of a drive assembly and a damage control unit for determining wear or damage in the drive assembly; and

Figure 3 is a graphical representation of measurements taken during operation of a damage control unit and drive assembly according to one embodiment of the present invention.

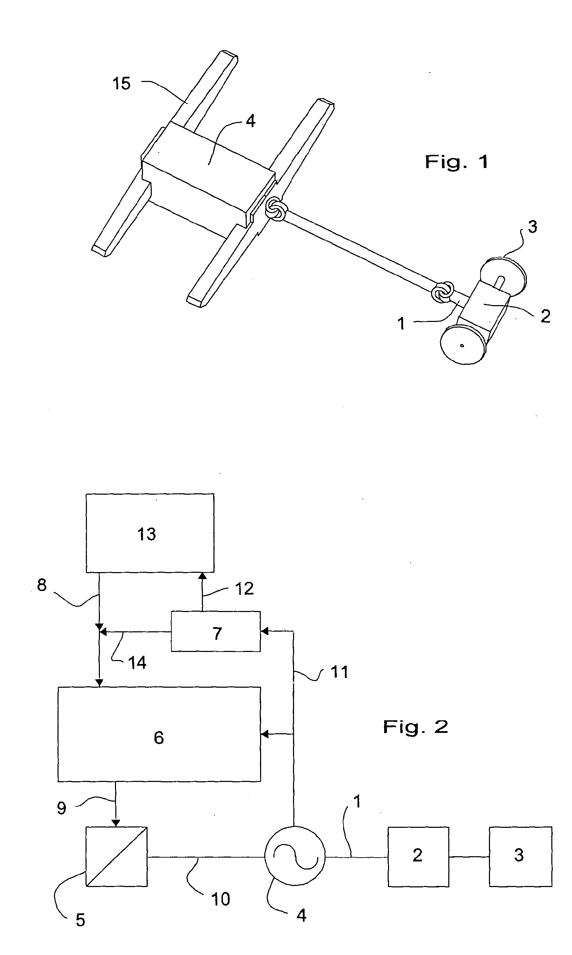

Figure 1 shows a drive assembly comprising a shaft (1) engaging the gear in the gearbox (2), driving the load (3), in this case a set of wheels. The shaft (1) is driven through a cardan shaft by motor (4). The motor is provided with an angular velocity measurement means (15) to determine the angular velocity.

Figure 2 shows the method of determining wear and damage in a drive assembly as illustrated in figure 1 using the same reference numerals for comparable parts. A set point torque (8) is generated by the operator unit (13) to run the drive assembly in an idle run condition. An idle run condition means a set point operating torque of the shaft (1) of near zero. The damage control unit (7) then switches on and superimposes for a small time interval on the set point operating torque signal an harmonic excitation torque signal (14) which combined superimposed signal is fed to a converter control unit (6). The converter control unit (6) controls the converter (5) by signal (9). The converter (5) provides current (10) to the motor (4), which drives shaft (1), and through (2), the gear unit the wheel set (3). A response of the drive assembly (11) to the harmonic excitation torque is measured and fed into the damage control unit (7) for analysis. Preferably the response is the angular velocity between shaft (1) and the stator of the rotor measured by sensor (15). The obtained or derived information (12) is forwarded to the operator unit (13). The response signal is analysed by comparing with the excitation tongue signal or ideal running reference signal using known techniques like bank pass filter, FFT or orthogonal correlation. Evaluation of the information can either be done by in the damage control unit (7) or in the operator unit (13).

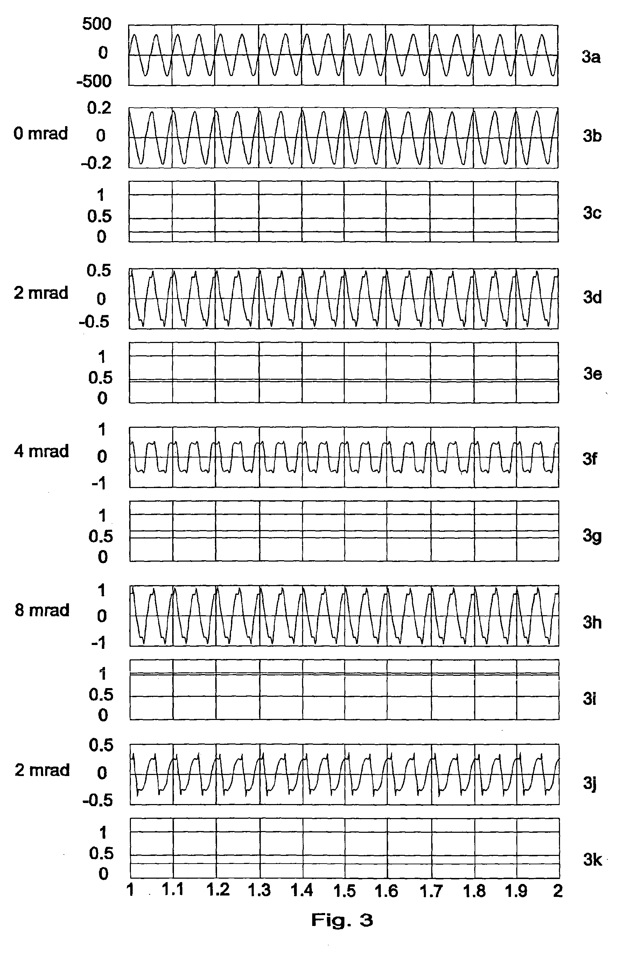

The invention will be described more in detail by the following example of the method according to the invention performed on a Simulink simulation of a drive assembly as shown in Figure 1 in an overall configuration as in Figure 2. The measurement results are illustrated in Figure 3.

In a drive assembly as shown in Figure 1, a motor (4) is fed by a converter (not shown) and drives the wheel set (3) by a cardanic shaft (1) and a gear (2). The angular velocity of the rotor is measured by a sensor (15) at the rotor. The idle run conditions are chosen at zero torque.

The frequency and magnitude of the excitation signal (14) are determined according to the above described formula (I) using the inertia of the rotor of 5 kgm2 and the stiffness of the cardanic shaft of 250 kNm/rad. This results in an eigen frequency of 35.6 Hz. In order to prevent interference from resonances in the system the excitation signal frequency was chosen considerably below this value at 20 Hz. The magnitude of the excitation signal was chosen at 250 Nm, which is 5 % of a normal torque. Figure 3a shows the excitation torque (in Nm) used in the experiments.

In the example the tooth clearance is chosen at 0, 2, 4 and 8 millirad (mrad), representing respectively the reference condition, the minimum and maximum allowed tooth clearance and an unacceptable out-of-range tooth clearance. The clearance is expressed in mrad, which is the free angular displacement of the rotor in the gear. The rotor velocity (in rad/sec) was measured as the response signal to the excitation signal over a time interval of 2 seconds.

The analysis of the measured response rotor velocity was done with two butterworth low pass filters (4th order). The cut-off frequency for the filters was chosen at 2 Hz.

The results of the measurements are shown in Figure 3. The superimposed excitation torque (in Nm) is shown in Figure 3a. For each of the measurements (at tooth clearance 0, 2, 4 and 8 millirad (mrad)) the measured response rotor velocity (in rad/sec) and the resulting analysis thereof is shown in Figure 3 (b) to 3 (i) respectively

The evaluation of the response measurement shows that the frequency content of the angular velocity of the rotor increases nearly linear with increasing tooth clearance. The method hence provides a clear and unambiguous decision criterion for an operator or alarming system, specifically relating to the condition of the gear, in particular to the gear clearance. In this particular case, where the preferred gear clearance is chosen between 2 and 4 mrad, the output signal of the analysis has to be in the range of about 0.5 and 0.6. If the output signal is outside this range an inspection or maintenance is requested.

In another experiment the evaluation was done using the DFFT. The results are shown in Figure 4. The gear clearance correlated linearly with the peak height of the peak at the excitation frequency in the frequency spectrum. Further, it was found that the tooth clearance leads to the uneven multiples of the excitation frequency (60 Hz, 100 Hz,), which information also can be used for more detailed analyse purposes. The disadvantage of this method is that the required calculation power is much higher than by using the correlation method.

To investigate the influence not perfect idle running conditions, a set point torque of 62.5 Nm (25% of the magnitude of the excitation torque signal) was chosen on which the excitation torque signal was superimposed as described above. The results are shown in Figure 3(j) and (k). It can be seen that a small set-point torque does not influence the results.

**Claims**

1.  Method for determining wear or damage in a drive assembly comprising a shaft and a gear comprising

    -   running the drive assembly in an idle run condition at a set point operating torque of the shaft near zero,
    -   superimposing a harmonic excitation torque on the set point operating torque,
    -   measuring a response of the drive assembly to the harmonic excitation torque,
    -   analysing the response to evaluate information regarding the wear or damage in the drive assembly.

2.  Method according to claim 1, wherein the evaluated information is the flank clearance of the gear.

3.  Method according to claim 1 or 2, wherein the shaft is driven by an electric motor fed by a converter controlled by a converter control unit and wherein the harmonic excitation torque is superimposed by superimposing a harmonic excitation signal with a defined magnitude and frequency to the set point signal of the converter control unit that corresponds to the set point operating torque.

4.  Method according to any of claims 1 to 3, wherein the response measured is the angular velocity of the shaft.

5.  Method according to any of claims 1 to 3, wherein the response measured is an electrical characteristic, for example the motor current or the DC current of the converter.

6.  Method according to any of claims 1 to 5, wherein the magnitude of the harmonic excitation torque is chosen such that a rotational displacement of a pinion of the shaft is higher than the maximum clearance to be detected.

7.  Method according to any of claims 1 to 6, wherein the harmonic excitation torque is applied for a limited short period, preferably less than 30 sec.

8.  Method according to any of claims 1 to 7, wherein frequency of the harmonic excitation torque is chosen sufficiently far from a torsional eigen-frequency of the drive assembly.

9.  Method according to claim 8, wherein the frequency of the harmonic excitation torque is chosen preferably below the lowest torsional eigen-frequency, preferably lower than 90% of the lowest torsional eigen-frequency.

10. Method according to any of claims 1 to 9, wherein the response is analysed by comparing the measured response with the harmonic excitation signal.

11. Method according to any of claims 1 to 9, wherein the response is analysed by comparing the measured response (11) with a reference response measured in reference running conditions in response to a same harmonic excitation torque.

12. Method according to any of claims 1 to 11, wherein the response is analysed using a band pass filter, Discrete Fast Fourier Transformation (DFFT) or orthogonal correlation method.

13. Method according to any of claims 1 to 11, wherein the response is analysed by orthogonal correlation of the harmonic excitation torque or harmonic excitation signal with the measured response (11), resulting in an orthogonal correlation function, and evaluating this function by calculating a quote-part thereof as a measure for the clearance of the gear.

14. Method according to any of claims 1 to 13, wherein an alert signal is given in case the evaluated information deviates more than a pre-defined amount from a stored reference value.

15. A damage control unit for determining wear or damage in a drive assembly, the drive assembly comprising an electric motor, a converter, a converter control unit, a gear, said damage control unit comprising:

- An activating/deactivating unit which enables the damage control unit to act periodically,
- A signal generator which generates a harmonic excitation signalwith predefined magnitude and frequency to connect to the converter control unit for superimposing the excitation signal to a set point torque signal of the converter control unit,
- A response measurement means for measuring a response of the drive assembly to the harmonic excitation signal (14),
- A response analysis means to analyse the response of the drive assembly and evaluate information regarding the wear or damage in the drive assembly.

16. A damage control unit according to claim 15, wherein the response measurement means is an angular velocity measurement sensor.

17. A damage control unit according to either of claims 15 or 16 further comprising an operator unitfor input and output of information between a user and the damage control unit.

18. A damage control unit according to any of claims 15 to 17, wherein the response analysis means comprises computation means comprising algorithms for performing orthogonal correlation calculations, digital band pass filter calculations or discrete fast fourier transformation (DFFT) on the response signal.

19. A drive assembly comprising an electric motor, a converter, a converter control unit, a gear, and a damage control unit according to any one of claims 16 to 18.

20. A method for determining wear or damage in a drive assembly substantially as hereinbefore described having reference to any of the accompanying figures.

21. A damage control unit substantially as hereinbefore described having reference to either of Figures 1 or 2.

22. A drive assembly substantially as hereinbefore described having reference to either of Figures 1 or 2.

15

4

Fig. 1

3

1

2

13

8

12

7

14

11

6

Fig. 2

9

1

5

10

4

2

3

Fig. 3

**EP 1 489 401 A1**

**European Patent Office**

**EUROPEAN SEARCH REPORT**

Application Number

EP 04 25 3489

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | DE 33 41 594 A (MITSUBISHI ELECTRIC CORP) 20 June 1984 (1984-06-20) * abstract; figure 6 * ----- | 1-22 | G01M13/02 |
| | | | **TECHNICAL FIELDS SEARCHED (Int.Cl.7)** |
| | | | G01M |

The present search report has been drawn up for all claims

| Place of search | Date of completion of the search | Examiner |
|---|---|---|
| Berlin | 5 October 2004 | Zafiropoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**ANNEX TO THE EUROPEAN SEARCH REPORT
ON EUROPEAN PATENT APPLICATION NO.**

EP 04 25 3489

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2004

| Patent document cited in search report | | Publication date | Patent family member(s) | | Publication date |
|---|---|---|---|---|---|
| DE 3341594 | A | 20-06-1984 | JP | 59109868 A | 25-06-1984 |
| | | | DE | 3341594 A1 | 20-06-1984 |

EPO FORM P0459

For more details about this annex : see Official Journal of the European Patent Office, No. 12/82